## Europäisches Patentamt
## European Patent Office
## Office européen des brevets

(19)

(11) **EP 0 635 769 B1**

(12)

# FASCICULE DE BREVET EUROPEEN

(45) Date de publication et mention
de la délivrance du brevet:
**03.06.1998 Bulletin 1998/23**

(51) Int Cl.⁶: **G03G 19/00**, H04N 1/032,
G11B 5/66

(21) Numéro de dépôt: **94400517.2**

(22) Date de dépôt: **09.03.1994**

(54) **Média pour imprimantes magnétographiques et utilisation d'un tel média**

Medien für magnetographischen Drucker und ihre Verwendung

Media for magnetographic printer and use of such media

(84) Etats contractants désignés:
**BE CH DE ES FR GB IT LI NL**

(30) Priorité: **21.07.1993 FR 9308969**

(43) Date de publication de la demande:
**25.01.1995 Bulletin 1995/04**

(73) Titulaire: **NIPSON**
**F-90005 Belfort Cédex (FR)**

(72) Inventeur: **Eltgen, Jean-Jacques**
**F-90400 Danjoutin (FR)**

(74) Mandataire: **Colombe, Michel et al**
**Direction de la Propriété Intellectuelle BULL SA**
**Poste courrier: LV 59C18**
**68 route de Versailles**
**78430 Louveciennes (FR)**

(56) Documents cités:
**WO-A-82/04344        FR-A- 2 600 178**

## Description

La présente invention concerne un média pour imprimantes magnétographiques et son utilisation pour l'impression de différentes nuances de gris sur un support d'impression.

Dans l'état actuel des réalisations connues la magnétographie est essentiellement une technique digitale qui permet d'avoir des gammes de gris mais cela au détriment de la résolution de l'image. Ainsi pour une adressabilité donnée, les points ("dots") constituant l'image sont soit magnétiquement vierges, soit aussi proches que possible de la saturation. Il en résulte que la réflectance des positions de la grille d'adressabilité ne prend que deux valeurs, blanc et noir.

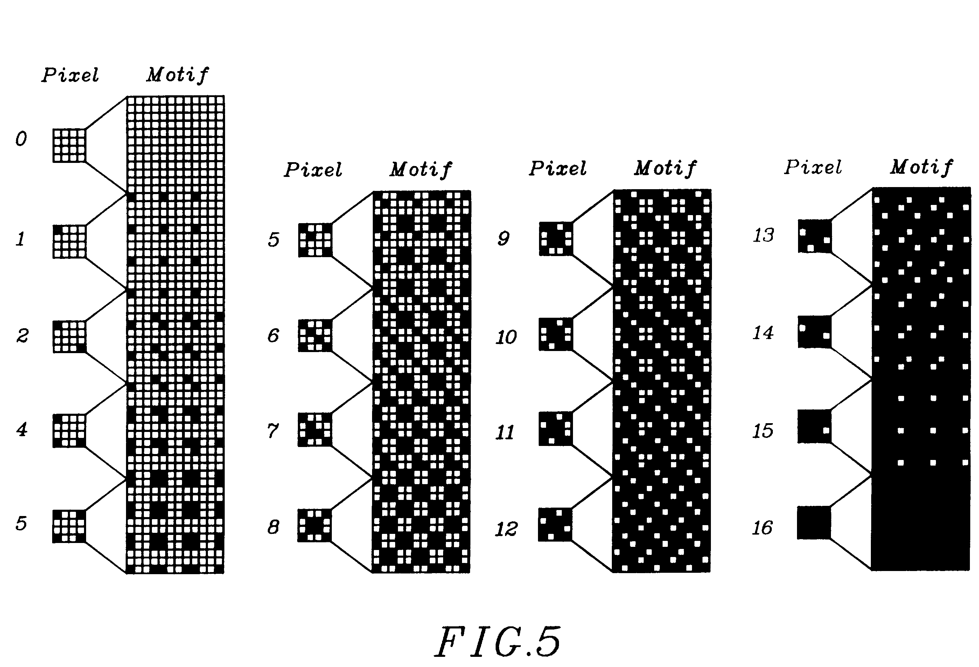

Dans ces conditions une gamme de nuances de gris ne peut être constituée qu'en utilisant un élément d'image "pixel" composé de plusieurs points "dots" par une méthode appelée parfois "dithering". En général, le pixel est constitué d'une matrice carrée n x n, offrant alors $n^2$ niveaux de gris différents comme représentés à la figure 5. La résolution digitale des gris par utilisation d'un élément d'image (pixel) de n x n points (dots) présente le grave inconvénient de réduire la résolution R de l'image dans le rapport n. Par exemple, pour une adressabilité qui représente la densité spatiale de la grille théorique des points adressables, c'est-à-dire inscriptible de 240 points par pouce (dpi) et un pixel 4 x 4 autorisant 16 niveaux de gris, la résolution de l'image tombe à 60 pixels par pouce (ppi, pixel per inch) ce qui est manifestement trop faible pour que l'oeil intègre correctement les réflectances des différents points de l'élément d'image de façon à en n'obtenir que la valeur moyenne. Si l'on veut conserver une résolution d'image de 240 éléments d'image par pouce (ppi, pixel per inch), l'alternative consiste à utiliser une adressabilité 4 fois plus forte, c'est-à-dire, 960 points par pouce (dpi, dot per inch). L'obtention de telles densités ne va pas sans poser de sérieux problèmes de réalisation des barres de têtes d'écriture nécessaires aux imprimantes parallèles rapides.

Il est connu par la demande de brevet FR-A-2 600 178 un élément d'enregistrement magnétique ou tambour destiné à être utilisé dans une imprimante magnétographique et permettant d'améliorer la qualité des impressions. Cet élément d'enregistrement magnétique est constitué d'un support en matériau amagnétique sur lequel sont déposées successivement, une couche de matériau magnétiquement doux ayant un champ coercitif inférieur à 40 A/m, et une couche de matériau magnétiquement dur dont la valeur du champ coercitif est comprise entre 30 000 et 60 000 A/m. Cet élément d'enregistrement magnétique permet la formation d'images latentes dont la densité et la taille des points magnétisés répondent aux exigences de finesse traditionnelles et qui en plus conserve cette finesse et qualité d'impression lorsque le tambour est entraîné à une vitesse supérieure à 50 cm/s. En effet, au-delà de ces vitesses d'entraînement, la qualité d'impression des dispositifs d'impression magnétographiques diminuent du fait d'impressions fantômes et de maculages prononcés du fond du papier. Cependant, l'élément d'enregistrement décrit dans le document FR-A-2 600 178 fonctionne également selon la technique digitale et permet donc d'avoir des gammes de gris mais au détriment de la résolution de l'image.

La présente invention a donc pour but de proposer un média qui permette de générer des images présentant un nombre de nuances de gris suffisant sans pour autant pénaliser l'adressabilité ou la résolution de l'image.

Ce but est atteint par le fait que le média pour imprimantes magnétographiques comporte une pluralité (k) de couches magnétiques élémentaires à cycles d'hystérésis relativement durs avec effet de seuil et de saturation marqué, dont la coercitivité et/ou l'épaisseur des couches varie en fonction de la position de la couche sur un substrat magnétique doux.

Selon une variante de réalisation, le média pour imprimantes magnétographiques comporte une pluralité (k) de couches élémentaires à cycles d'hystérésis relativement durs avec effet de seuil et de saturation marqué, de même épaisseur, et de coercitivité différente et croissante dans le sens des couches disposées en profondeur du substrat magnétique doux.

Selon une autre particularité, le média est utilisé avec des droites de démagnétisation à pentes identiques pour chaque couche.

Selon une autre variante les couches sont de même coercitivité et d'épaisseur décroissante dans le sens des couches disposées en profondeur du substrat magnétique doux.

Selon une autre particularité le média est utilisé avec des droites de démagnétisation à pente décroissante dans le sens des couches disposées en profondeur du substrat magnétique doux.

Selon une autre particularité, la variation des coercitivités est obtenue par dosage des hypophosphites et/ou par réglage des densités de courant de dépôt, dans le cas de couches obtenues par dépôt électrolytique d'alliage cobalt-nickel.

Selon une autre particularité, les couches sont déposées par pulvérisation sous vide.

Selon une autre particularité, les couches différentes sont séparées par de fines couches non magnétiques pour faciliter le dépôt de la couche suivante et diminuer le couplage magnétique des différentes couches.

Un autre but de l'invention est de proposer l'utilisation du média selon l'invention pour réaliser des impressions à nuances de gris multiples sans augmenter le nombre de têtes d'écriture de la barre de tête d'écriture.

Ce but est atteint par le fait que l'utilisation du média pour l'impression de $n^2$ k nuances de gris sur une feuille de papier consiste à utiliser un substrat magnétique doux revêtu d'un média à (k) couches permettant d'obtenir en fonction de l'épaisseur différentes des couches ou de la coercitivité différente de ces couches, k niveau de gris défini par des masses différentes de toner retenues par unités de surface, et une tête d'écriture des éléments d'image à n x n points.

A titre d'exemple d'utilisation, le nombre n de points peut être égal à 2 et le nombre k de couches égal à 3, soit 12 niveaux de gris en final.

Selon un autre exemple, le nombre n de points peut être égal à 2, le nombre k de couches égal à 2, soit 8 niveaux de gris en final.

D'autres particularités et avantages de la présente invention apparaîtront plus clairement à la lecture de la description ci-après de différents modes de réalisation de l'invention donnés à titre exemplatif mais non limitatif à l'aide des dessins ci-joints, dans lesquels :

La figure 1 représente un exemple de première réalisation d'un média à couches superposées et à pôles d'écriture ;

La figure 2 représente les cycles d'hystérésis des différentes couches du média ;

La figure 3 représente l'utilisation d'un substrat à trois couches qui associée à un élément d'image à 4 points (2x2), permet 12 niveaux de gris ;

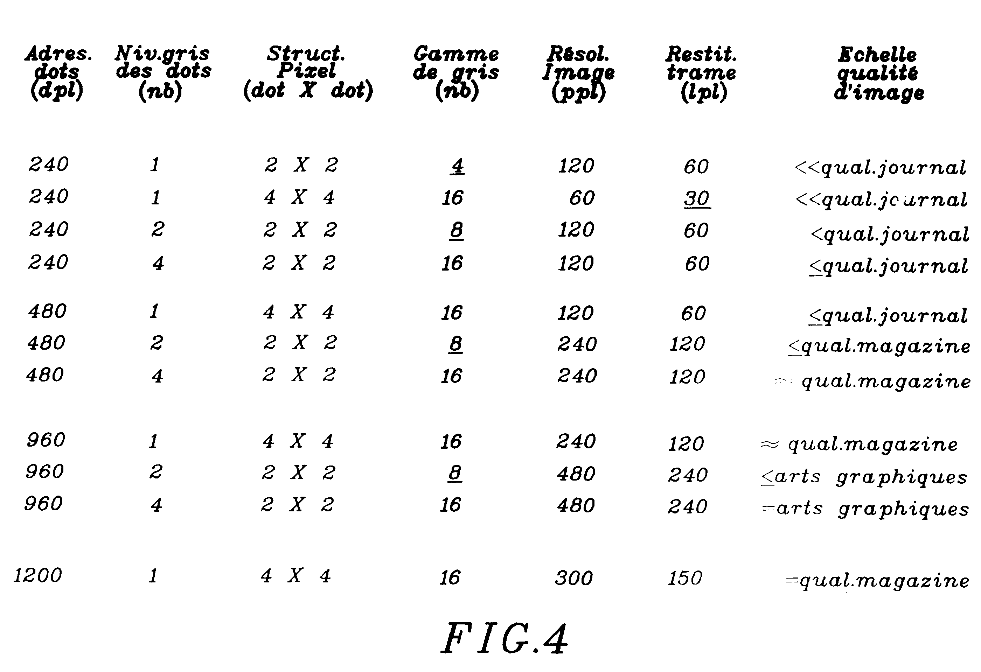

La figure 4 représente un tableau non exhaustif des configurations possibles.

La figure 5 représente les exemples d'images à 16 nuances de gris obtenus selon la méthode de l'art antérieur ;

La figure 6 représente les courbes d'aimantation résiduelles des points élémentaires des différentes couches du média ;

La figure 7 représente l'énergie magnétostatique totale du point sur un média multicouches en fonction du champ d'écriture de la tête ;

La figure 8 représente la courbe de détermination de l'aimantation résiduelle d'une couche à partir de la géométrie du point définissant le facteur démagnétisant et la pente de la courbe de démagnétisation ;

La figure 9 représente les courbes permettant de déterminer les champs de seuil pour un média à couches de même épaisseur, mais à aimantation à saturation croissante dans le sens de la profondeur du substrat.

La figure 10 représente les courbes d'hystérésis pour un média à couches d'épaisseur décroissantes de la surface vers le substrat et à aimantation à saturation constante pour chaque couche ;

La figure 11 représente les courbes d'hystérésis permettant la détermination des champs de seuil pour un média composé de couches de même aimantation à saturation et de même épaisseur.

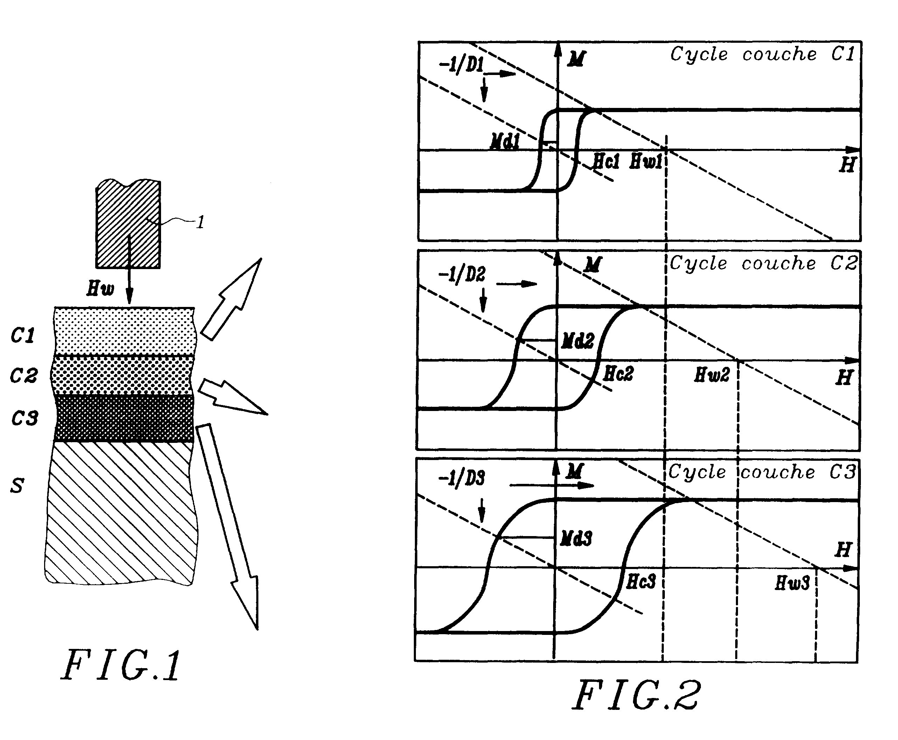

La figure 1 représente un substrat magnétique doux (S) qui peut constituer par exemple le tambour d'une machine magnétographique telle que celle connue par la demande de brevet EP 082 742, ou bien une bande continue ou tout autre média de support.

Sur le substrat (S) sont disposées plusieurs couches magnétiques C1, C2, C3, au nombre de trois dans l'exemple considéré sans que ceci ne soit en aucun cas limitatif de la portée de l'invention. Ces couches sont éventuellement séparées par de fines couches non magnétiques pour faciliter leur dépôt. Chaque couche comme représentée à la figure 2 à une aimantation à saturation ($M_{si}$) et un champ coercitif ($H_{ci}$) différent, ces champs coercitifs et aimantations ont des valeurs croissantes lorsque l'on considère les couches les unes après les autres dans le sens de déplacement de la surface d'écriture vers le coeur du substrat.

En outre, comme représenté à la figure 2, chaque couche individuelle ($C_i$) a des propriétés magnétiques classiques, en particulier un cycle d'hystérésis relativement "dur" avec un effet de seuil et de saturation marqué, ainsi le cycle d'hystérésis de la couche C3 a un champ coercitif ($H_{c3}$) supérieur au champ coercitif ($H_{c2}$) du cycle de la couche C2. De même l'aimantation à saturation de la couche C3, $M_{s3}$ est supérieur à l'aimantation à saturation $M_{s2}$ de la couche C2 représentée sur la figure 2. Les champs coercitifs ($H_{ci}$) des différentes couches ($C_i$) sont nettement distincts de façon à définir une succession d'intervalles de champs disjoints. Dans chacun de ces intervalles pris séparément, chacune des couches est, soit non significativement écrite, soit pratiquement saturée.

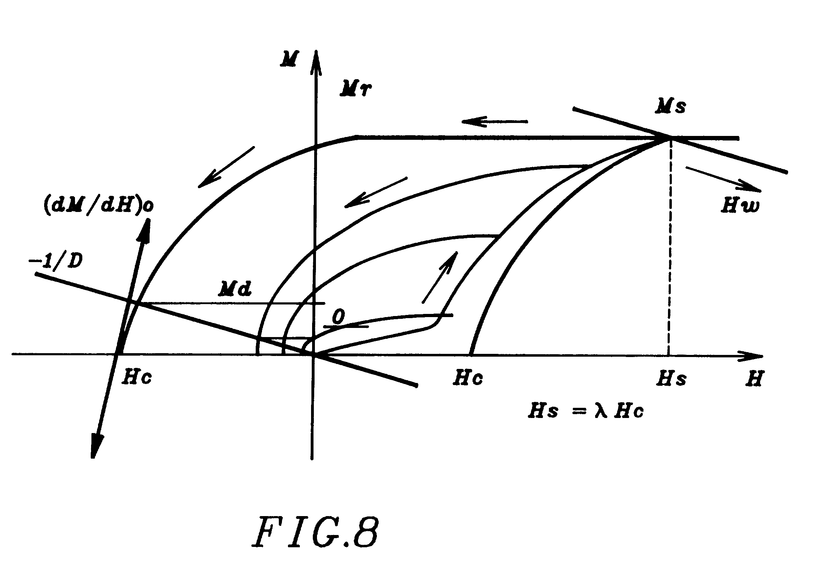

Nous rappellerons que le champ coercitif ($H_{ci}$) est donné par la valeur pour laquelle la courbe représentant le cycle d'hystérésis coupe l'axe des champs (H) et le champ de saturation ($H_{si}$) est défini par la valeur pour laquelle les deux courbes formant le cycle hystérésis se rejoignent comme représenté par Hs à la figure 8.

Cette valeur ($H_{si}$) peut être exprimée en fonction du champ coercitif ($H_{ci}$) par la relation $H_{si} = \lambda_i.H_{ci}$.

A chaque champ de saturation ($H_{si}$) est associé en fonction du champ démagnétisant ($H_{di}$), un champ de seuil d'écriture ($H_{wi}$) qui permet de connaître les valeurs à partir desquelles il y a écriture ou en dessous desquelles il n'y a pas d'aimantation et qui est déterminé par : $H_{wi} = H_{si} + H_{di}$.

Le champ démagnétisant est lié à la géométrie du point (dot) élémentaire (épaisseur par rapport à la surface aimantée) et à l'aimantation prise par la couche selon la relation : $H_{di} = D_i M_{si}$, où $D_i$ est le facteur de démagnétisation. Cette relation définit dans le plan (H, M) une direction de pente - 1/Di appelée direction de démagnétisation.

Lorsque le champ démagnétisant atteint la valeur 0 (zéro), en fonction de son facteur démagnétisant (Di) qui est représenté par la courbe de démagnétisation qui est en fait une droite de pente -1/Di, la couche magnétique (Ci) conserve une aimantation résiduelle (Mdi) qui est représentée par la projection sur l'axe des aimantations du point d'intersection du cycle d'hystérésis et de la droite de démagnétisation de pente -1/Di et passant par le centre 0 du repère. Ainsi pour un champ coercitif donné (Hci) et pour des propriétés magnétiques données de la couche (Ci), il faudra soumettre celles-ci à un champ d'aimantation supérieur au champ de seuil d'écriture (Hwi) pour produire à la suite d'une désaimantation, une aimantation résiduelle significative (Mdi). L'aimantation résiduelle (mdi) peut être exprimée par la relation :

$$M_{di} \approx H_{ci} \, (dM/dH)_{0i} \, / \, [D_i + (dM/dH)_{0i}]$$

Pour des cycles supposés parfaitement carrés donc approchant les cycles représentés à la figure 2 : $\lambda i$ est pratiquement égal à 1 (en effet $\lambda i$ ne dépend que de la carrure du cycle intrinsèque et non pas de la géométrie des dots), $(dM/dH)_{0i}$ est très supérieur à 1 ce qui exprime que la pente au voisinage du point H = Hc est forte. Enfin, pour des dots très plats, c'est-à-dire d'épaisseur faible par rapport à leur surface, Di est pratiquement égale à 1, d'où l'expression plus simple :

$$H_{wi} \approx H_{ci} + M_{si}$$

$$M_{di} \approx H_{ci}$$

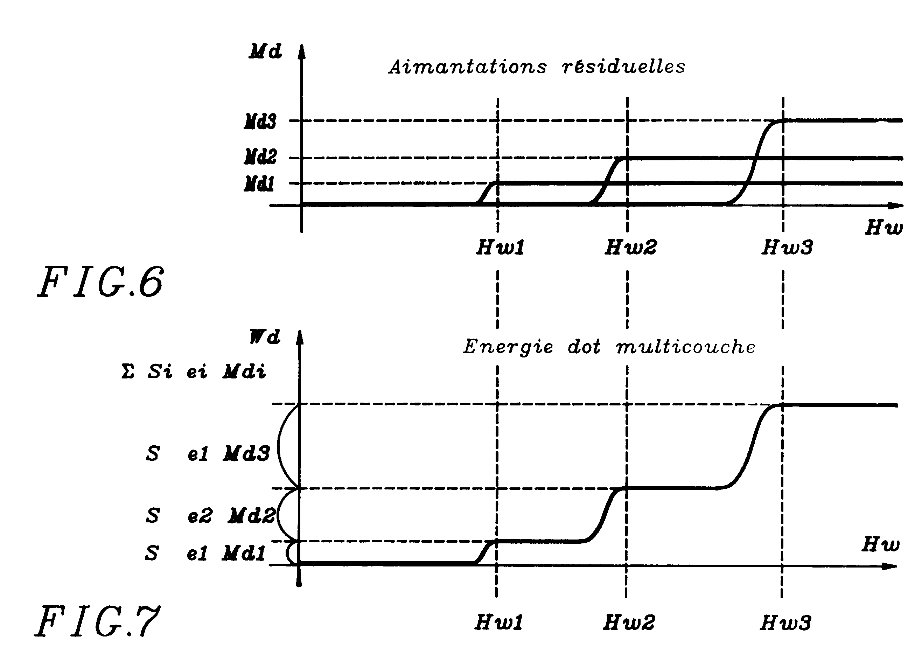

Ainsi donc, en soumettant une couche (Ci) à un champ supérieur à son champ de seuil d'écriture ($H_{wi}$), le point image aura selon la couche utilisée une aimantation résiduelle ($M_{di}$) qui correspond aux aimantations résiduelles représentées à la figure 6. Comme le substrat est constitué d'une succession de couches différentes à champ coercitif différent, l'aimantation résiduelle du point sur un substrat multicouche correspondra en réalité à la courbe de la figure 7 permettant ainsi en fonction des niveaux de champ d'écriture de créer pour chaque dot, trois possibilités de représentation en niveau de gris. Ces possibilités de représentation en niveau de gris correspondent aux valeurs de magnétisation résiduelle représentées par l'ensemble des couches lorsqu'ils sont soumis à des champs de seuil différents comme représenté à la figure 7.

Une telle approche autorise l'utilisation de têtes d'écriture à forte dispersion de champ d'écriture pour un courant d'excitation donné puisque cela revient à créer une caractéristique "énergie du point/champ d'écriture" toujours fortement non linéaire et avec plusieurs seuils intermédiaires de saturation.

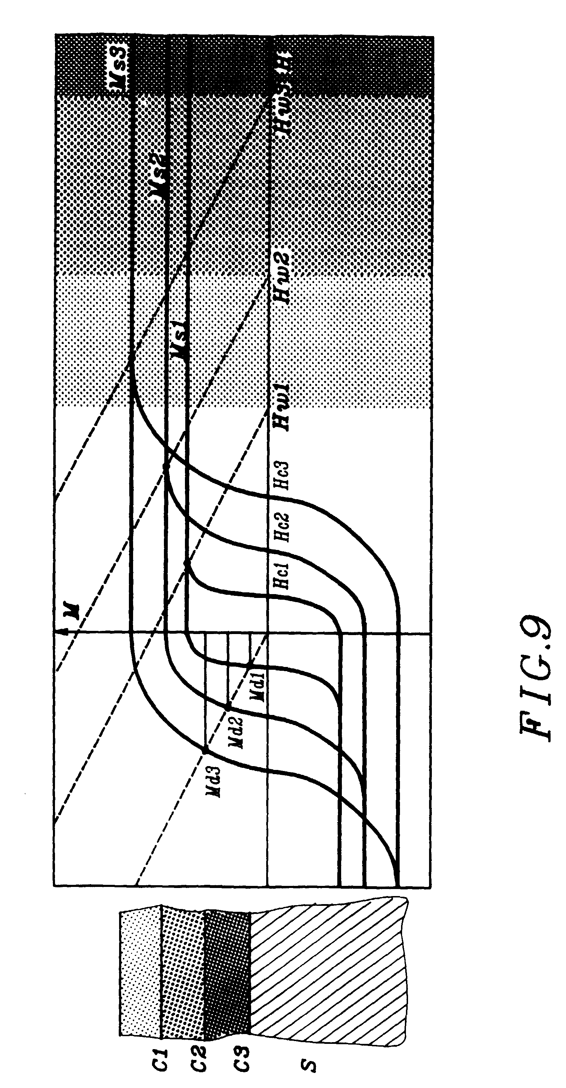

La solution présentée aux figures 1 et 2 est résumée à la figure 9 où l'on peut constater que les trois couches de même épaisseur utilisées avec des pentes de droite de démagnétisation identiques puisque de coefficients de démagnétisation identique doivent avoir des aimantations à saturation Msi très différentes pour permettre une large différenciation des champs de seuil Hwi. Ces champs de seuil d'écriture différents permettront ainsi de réaliser 3 niveaux de gris au niveau du point (dot) élémentaire. De même on peut constater que dans ce mode de réalisation, les aimantations résiduelles Mdi croissent des couches superficielles vers les couches les plus profondes. La variation des coercitivités et par conséquent des aimantations à saturation est obtenue par dosage des hypophosphites et/ou réglage des densités de courants de dépôt dans le cas de couches magnétiques électrodéposées et constituées de cobalt-nickel-phosphore.

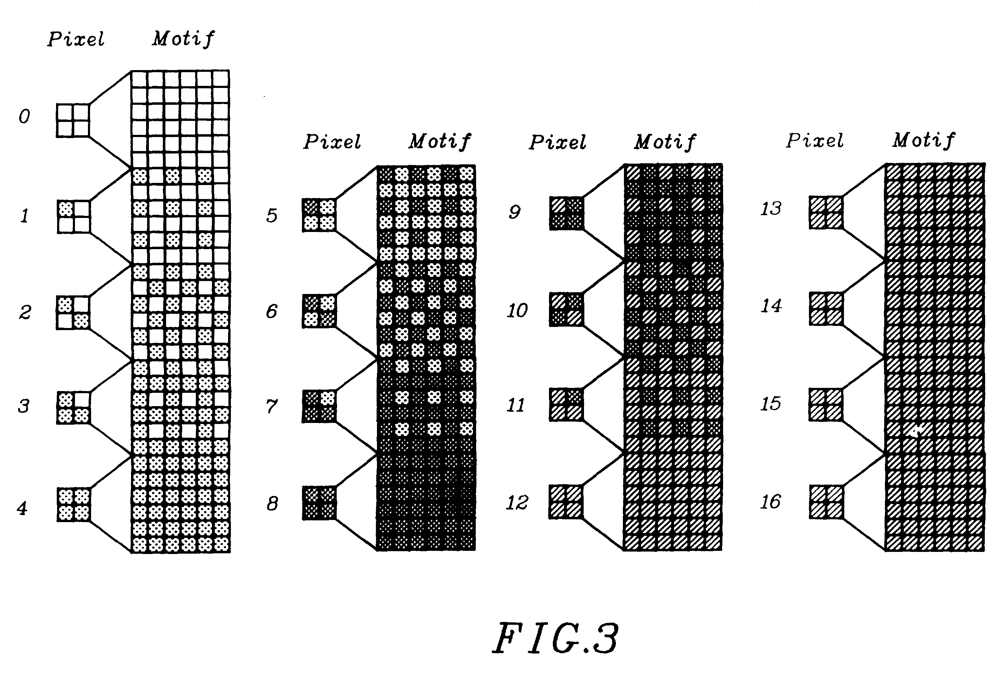

La figure 3 représente l'utilisation d'un substrat à trois couches qui, associée à un élément d'image à 4 points (2x2), permet de réaliser 12 niveaux de gris. En effet, dans cet exemple n est égal à 2 et k est égal à 3. Chaque pixel est constitué de 4 points formant une matrice carrée 2 x 2. Le substrat comportant trois couches magnétiques, selon la couche magnétique utilisée chaque point permettra trois possibilités de représentation en niveau de gris. Ces trois niveaux de gris de chaque point sont représentés symboliquement à la figure 3 par des hachures ou mouchetures. Les trois niveaux de gris sont, dans le sens d'une nuance sombre croissante, une moucheture claire, des hachures, et une moucheture foncée. Ainsi, comme représenté à la figure 3, en jouant sur les niveaux de gris de chacun des quatre points des pixels, on réalise 12 nuances de gris permettant d'obtenir des motifs en conservant une bonne résolution de l'image. Les 12 nuances de gris formées par les pixels sont numérotées de 1 à 12 à la figure 3 et sont composées respectivement de : (1) un point moucheté en clair et trois points blancs (un point est blanc quand aucune des trois couche magnétique n'est utilisée, c'est à dire que le point ne retient pas de toner), (2) deux points mouchetés en clair et deux points blancs, les points de niveaux différents étant disposés de façon alternée dans la matrice formant le pixel, (3) trois points mouchetés en clair et un point blanc, (4) quatre points mouchetés en clair, (5) un point moucheté en foncé et trois points mouchetés en clair, (6) deux points mouchetés en clair et deux points mouchetés en foncé, les points de niveaux différents étant disposés de façon alternée dans la matrice formant le pixel, (7) trois points mouchetés en foncé et un point moucheté en clair, (8) quatre points mouchetés en foncé, (9) trois points mouchetés en foncé et un point hachuré, (10) deux points mouchetés en foncé et deux points hachurés, les points de niveaux différents étant disposés de façon alternée dans la matrice formant le pixel, (11) un point moucheté en foncé et trois points hachurés, et enfin, (12) quatre points hachurés. Les motifs correspondants obtenus par des combinaisons de ces douze nuances (pixels) sont représentés à la droite des pixels. Les pixels numérotés 13 à 16 sont identiques au pixel (12) formé de quatre points hachurés. Le motif correspondant, formé uniquement des pixels 13 à 16 est donc "uni" dans une nuance déterminée de gris.

Les relations que l'on a vues précédemment peuvent être optimisées en effectuant des mesures sur les cycles réels. Dans ce cas, les carrures des cycles d'hystérésis déterminent les coefficients $\lambda_i$ et généralement ce coefficient est de l'ordre de 2 ou 3, ainsi que les pentes des dM/dH au voisinage du champ coercitif (Hc). L'épaisseur des différentes couches comparées à la surface S des points écrits, qui dépend elle-même de la section du pole d'écriture permet d' estimer les coefficients de démagnétisation Di de ces couches et d'en tirer la pente - 1/Di des droites de fonctionnement de la démagnétisation. Le tracé de ces droites donne alors les aimantations résiduelles des différentes couches ainsi que les champs de seuil d'écriture Hwi correspondants aux différents niveaux. L'objectif est d'obtenir des plages suffisamment larges entre ces différents seuils Hwi comme dans le premier mode de réalisation explicité ci-dessus.

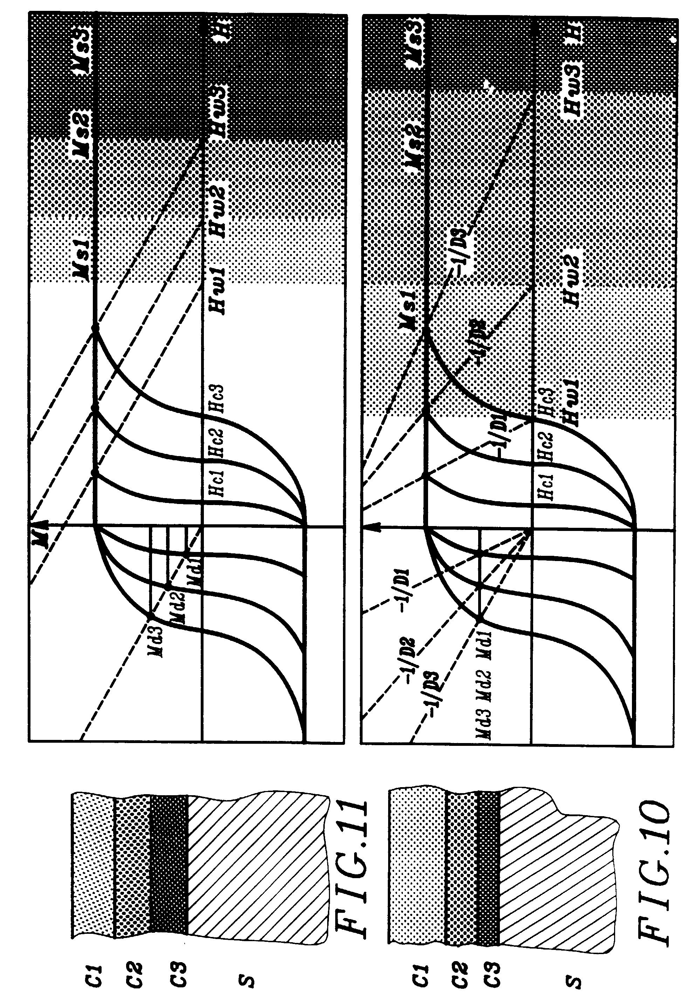

Le mode de réalisation de la figure 10 représente une autre variante de réalisation de l'invention dans laquelle les couches magnétiques C1, C2, C3 décroissent de la surface vers le substrat S, tandis que les facteurs de démagnétisation croissent dans le même sens. En conséquence, les pentes (-1/Di) des droites de fonctionnement décroissent de la surface vers le substrat S. La divergence des droites de fonctionnement accentue les intervalles entre les champs de seuil d'écriture (Hwi) même dans le cas de couches de même aimantation à saturation. Si en plus, les aimantations à saturation sont différentes pour chaque couche, on améliore ainsi la différenciation des champs de seuil. En outre, cette variante a également pour effet de rapprocher les aimantations résiduelles (Mdi). Une telle variante est relativement facile à réaliser car une suite de champs coercitifs (Hci) s'obtient aisément par dosage des hypophosphites et/ou réglages des densités de courant de dépôt dans le cas de couches de cobalt-nickel-phosphore (Co-Ni-P) électrodéposées. Par contre, l'obtention d'une suite d'aimantation à saturation (Msi) couvrant une large plage comme dans le cas de la figure 9, s'avère plus difficile.

L'utilisation de couches de même aimantation à saturation (Msi) et de même épaisseur représenté à la figure 11, qui a pour conséquence d'avoir des pentes de droite de fonctionnement identiques, ne permet pas d'obtenir des distances entre champ de seuil Hwi suffisantes. En effet, si les distances entre champ de seuil (Hwi) sont trop faibles, les seuils ne seront pas suffisants malgré la dispersion importante des champs produits par les têtes d'écriture pour réaliser des niveaux de gris que l'on puisse distinguer facilement.

## Revendications

1. Média pour imprimantes magnétographiques caractérisé en ce qu'il comporte une pluralité (k) de couches magnétiques élémentaires, à cycles d'hystérésis relativement durs avec effet de seuil et de saturation marqué, dont la coercitivité et/ou l'épaisseur des couches varie en fonction de la position de la couche sur un substrat magnétique doux.

2. Média selon la revendication 1, caractérisé en que les couches sont de même épaisseur, et de coercitivité différente et croissante dans le sens des couches disposées en profondeur du substrat magnétique doux.

3. Média selon la revendication 2 caractérisé en ce qu'il est utilisé avec des droites de démagnétisation à pentes identiques pour chaque couche.

4. Média selon la revendication 1, caractérisé en ce que les couches sont de même coercitivité et d'épaisseur décroissante dans le sens des couches disposées en profondeur du substrat magnétique doux.

5. Média selon la revendication 4, caractérisé en ce qu'il est utilisé avec des droites de démagnétisation à pente décroissante dans le sens des couches disposées en profondeur du substrat magnétique doux

6. Média selon la revendication 2 ou 3, caractérisé en ce que la variation des coercitivités est obtenue par dosage des hypophosphites et/ou réglages des densités de courant de dépôt dans le cas de couches obtenues par dépôt électrolytique d'alliage cobalt-nickel.

7. Média selon une des revendications précédentes, caractérisé en ce que les couches sont déposées par pulvérisation sous vide.

8. Média selon une des revendications précédentes, caractérisé en ce que les couches différentes sont séparées par de fines couches non magnétiques pour faciliter le dépôt de la couche suivante et diminuer le couplage magnétique des différentes couches.

9. Utilisation du média selon une des revendications précédentes, caractérisée en ce que pour l'impression de $n^2 \cdot k$ nuances de gris sur une feuille de papier consiste à utiliser un substrat magnétique doux revêtu d'un média à k couches permettant d'obtenir en fonction de l'épaisseur différente des couches ou de la coercitivité différente de ces couches, k niveaux de gris par point (dot) élémentaire défini par des masses différentes de toner retenu par unités de surface, et une tête d'écriture des éléments d'image à n x n points.

10. Utilisation du média selon la revendication 9, caractérisée en ce que le nombre n de points est égal à 2 et le nombre k de couches est égal à 3.

11. Utilisation du média selon la revendication 9, caractérisée en ce que le nombre n de points est égal à 2, le nombre k de couches est égal à 2.


**Patentansprüche**

1. Medium für magnetographische Drucker, dadurch gekennzeichnet, daß es mehrere (k) elementare magnetische Schichten mit verhältnismäßig steilen Hystereseschleifen mit Schwelleneffekt und ausgeprägter Sättigung enthält, wobei die Koerzitivkraft und/oder die Dicke der Schichten in Abhängigkeit von der Position der Schicht auf einem weichmagnetischen Substrat unterschiedlich sind.

2. Medium nach Anspruch 1, dadurch gekennzeichnet, daß die Schichten die gleiche Dicke und eine unterschiedliche und in den Schichten in Richtung zum weichmagnetischen Substrat zunehmende Koerzitivkraft besitzen.

3. Medium nach Anspruch 2, dadurch gekennzeichnet, daß es mit Entmagnetisierungsgeraden mit gleichen Steigungen für jede Schicht verwendet wird.

4. Medium nach Anspruch 1, dadurch gekennzeichnet, daß die Schichten die gleiche Koerzitivkraft und eine in den Schichten in Richtung zum weichmagnetischen Substrat abnehmende Dicke besitzen.

5. Medium nach Anspruch 4, dadurch gekennzeichnet, daß es mit Entmagnetisierungsgeraden verwendet wird, deren Steigungen in den Schichten in Richtung zum weichmagnetischen Substrat abnehmen.

6. Medium nach Anspruch 2 oder 3, dadurch gekennzeichnet, daß die Veränderung der Koerzitivkräfte durch Dosierung der Hypophosphite und/oder durch Einstellungen der Ablagerungsstromdichten im Fall von Schichten, die durch elektrolytische Ablagerung einer Cobalt-Nickel-Legierung erhalten werden, erhalten wird.

7. Medium nach einem der vorangehenden Ansprüche, dadurch gekennzeichnet, daß die Schichten durch Vakuumzerstäubung abgelagert werden.

8. Medium nach einem der vorangehenden Ansprüche, dadurch gekennzeichnet, daß die verschiedenen Schichten durch nichtmagnetische dünne Schichten getrennt sind, um die Ablagerung der folgenden Schicht zu erleichtern und um die magnetische Kopplung der verschiedenen Schichten zu verringern.

9. Anwendung des Mediums nach einem der vorangehenden Ansprüche, dadurch gekennzeichnet, daß sie für den Druck von $n^2 \cdot k$ Graustufen auf einem Blatt Papier darin besteht, ein weichmagnetisches Substrat, das mit einem Medium mit k Schichten beschichtet ist, das ermöglicht, in Abhängigkeit von der unterschiedlichen Dicke der Schichten oder der unterschiedlichen Koerzitivkraft der Schichten k Graupegel pro Elementarpunkt (dot) zu erhalten, die durch unterschiedliche Mengen des pro Einheitsoberfläche gehaltenen Toners definiert sind, sowie einen Schreibkopf für Bildelemente mit n x n Punkten zu verwenden.

10. Anwendung des Mediums nach Anspruch 9, dadurch gekennzeichnet, daß die Anzahl n von Punkten gleich 2 ist und die Anzahl k von Schichten 3 ist.

11. Anwendung des Mediums nach Anspruch 9, dadurch gekennzeichnet, daß die Anzahl n von Punkten gleich 2 ist und die Anzahl k von Schichten gleich 2 ist.


**Claims**

1. Medium for magnetographic printers characterised in that it comprises a plurality (k) of elementary magnetic layers having relatively hard hysteresis loops, with marked saturation and threshold effect, the coercivity and/or layer thickness of which varies as a function of the position of the layer on a soft magnetic substrate.

2. Medium according to Claim 1, characterised in that the layers are of the same thickness, and of different coercivity increasing in the direction of the layers arranged in the depth of the soft magnetic substrate.

3. Medium according to Claim 2, characterised in that it is used with demagnetisation lines having identical gradients for each layer.

4. Medium according to Claim 1, characterised in that the layers are of the same coercivity and of a thickness decreasing in the direction of the layers arranged in the depth of the soft magnetic substrate.

5. Medium according to Claim 4, characterised in that it is used with demagnetisation lines having a gradient decreasing in the direction of the layers arranged in the depth of the soft magnetic substrate.

6. Medium according to Claim 2 or 3, characterised in that the variation in coercivity is obtained by measured addition of hypophosphites and/or adjustments to the deposition current density in the case of layers obtained by electrolytic deposition of cobalt-nickel alloy.

7. Medium according to one of the preceding claims, characterised in that the layers are deposited by vacuum spraying.

8. Medium according to one of the preceding claims, characterised in that the different layers are separated by fine non-magnetic layers in order to facilitate the deposition of the next layer and to reduce the magnetic coupling of the various layers.

9. Use of the medium according to one of the preceding claims, characterised in that for printing $n^2.k$ shades of grey on a sheet of paper consists in using a soft magnetic substrate coated with a medium having k layers allowing to be obtained, as a function of the differing thickness of the layers or the differing coercivity of these layers, k levels of grey per elementary dot defined by differing masses of toner retained per unit of surface area, and a writing head for the image elements with n x n dots.

10. Use of the medium according to Claim 9, characterised in that the number n of dots is equal to 2 and the number k of layers is equal to 3.

11. Use of the medium according to Claim 9, characterised in that the number n of dots is equal to 2, the number k of layers is equal to 2.

*FIG.2*

*FIG.1*

FIG.3

| Adres. dots (dpi) | Niv.gris des dots (nb) | Struct. Pixel (dot X dot) | Gamme de gris (nb) | Résol. Image (ppi) | Restit. trame (lpi) | Echelle qualité d'image |
|---|---|---|---|---|---|---|
| 240 | 1 | 2 X 2 | <u>4</u> | 120 | 60 | <<qual.journal |
| 240 | 1 | 4 X 4 | 16 | 60 | <u>30</u> | <<qual.journal |
| 240 | 2 | 2 X 2 | <u>8</u> | 120 | 60 | <qual.journal |
| 240 | 4 | 2 X 2 | 16 | 120 | 60 | ≤qual.journal |
| 480 | 1 | 4 X 4 | 16 | 120 | 60 | ≤qual.journal |
| 480 | 2 | 2 X 2 | <u>8</u> | 240 | 120 | ≤qual.magazine |
| 480 | 4 | 2 X 2 | 16 | 240 | 120 | ≈ qual.magazine |
| 960 | 1 | 4 X 4 | 16 | 240 | 120 | ≈ qual.magazine |
| 960 | 2 | 2 X 2 | <u>8</u> | 480 | 240 | ≤arts graphiques |
| 960 | 4 | 2 X 2 | 16 | 480 | 240 | =arts graphiques |
| 1200 | 1 | 4 X 4 | 16 | 300 | 150 | =qual.magazine |

## FIG.4

EP 0 635 769 B1

*Pixel*     *Motif*      *Pixel*     *Motif*      *Pixel*     *Motif*      *Pixel*     *Motif*

$FIG.5$

EP 0 635 769 B1

EP 0 635 769 B1

**Md**

*Aimantations résiduelles*

Md3

Md2

Md1

Hw1    Hw2    Hw3

**Hw**

*FIG.6*

**Wd**

*Energie dot multicouche*

$\Sigma$ Si ei Mdi

S  e1 Md3

S  e2 Md2

S  e1 Md1

Hw1    Hw2    Hw3

**Hw**

*FIG.7*

FIG.8

FIG.9

EP 0 635 769 B1

C1
C2
C3
S

**FIG.11**

C1
C2
C3
S

**FIG.10**